Europäisches Patentamt

European Patent Office

Office européen des brevets

(19)

(11) Veröffentlichungsnummer: **0 246 410**
**A2**

## (12) EUROPÄISCHE PATENTANMELDUNG

(21) Anmeldenummer: 87103685.1

(22) Anmeldetag: 13.03.87

(51) Int. Cl.⁴: **H02K 17/18** , H02K 16/02

(30) Priorität: 22.04.86 HU 167086

(43) Veröffentlichungstag der Anmeldung:
**25.11.87 Patentblatt 87/48**

(84) Benannte Vertragsstaaten:
**AT BE CH DE ES FR GB GR IT LI LU NL SE**

(71) Anmelder: **Ipari Müszergyár**
**Iklad Pf. 2**
**H-2170 Aszod(HU)**

(72) Erfinder: **Ivanics, Laszlo, Dipl.-Ing.**
**Sallai I. u. 21**
**H-1211 Budapest(HU)**

(74) Vertreter: **Patentanwälte Viering & Jentschura**
**Steinsdorfstrasse 6**
**D-8000 München 22(DE)**

(54) **Induktionsmotor.**

(57) Induktionsmotor, der einen Ständer (2) mit einer Ständerwicklung sowie einen davon über einen Luftspalt (13) getrennten, mit einer Motorwelle (10) verbundenen Läufer enthält, wobei der Läufer mit einem stromleitenden Element (5, 15) sowie einem magnetisch erregten Körper (4) versehen ist, wobei im Luftspalt (13) ein zwischen dem Ständer und dem magnetisch erregten Körper (4) angeordnetes, gegen den Läufer freilaufend abgestütztes, aus permanentmagnetischem Stoff ausgebildetes Drehelement (6) vorgesehen ist.

Fig.1

## Induktionsmotor

Die Erfindung betrifft einen Induktionsmotor, der einen Ständer mit einer Ständerwicklung sowie einen mit einer Motorwelle verbundenen und über einen Luftspalt vom Ständer getrennten Läufer enthält. Beim erfindungsgemäßen Induktionsmotor kann der Leistungsfaktor in einem breiten Einstellungsbereich beliebig ausgewählt werden.

Die Induktionsmotoren sind solche elektrischen Maschinen, bei denen ein Ständer mit einer Ständerwicklung sowie ein Läufer vorgesehen sind, der eine Wicklung aufweist, in welcher über die Ständerwicklung der Läuferstrom induziert wird. Die Induktionsmotoren können im einfachsten Aufbau mit einem Käfigläufer (Kurzschlußläufer) ausgestattet sein, wobei der Käfig aus Stäben und mit den Stäben auf der Stirnseite des Läufers verbundenen Ringen (Kurzschlußringen) besteht.

Der Wirkungsgrad der elektrischen Motoren kann durch das Verhältnis der an der Welle abnehmbaren wirksamen Leistung zu der dem Netz entnommenen Leistung definiert werden. Bei den Induktionsmotoren hängt die letztere von der Spannung, dem Strom und dem Phasenwinkel ab. Die an der Welle abnehmbare wirksame Leistung ist von vielen verschiedenen Faktoren abhängig. Es ist klar, daß der Wirkungsgrad durch die Verminderung der dem Netz entnommenen Leistung bei einem unveränderten oder begrenzt veränderten Wert der wirksamen Leistung verbessert werden kann.

Einen großen Teil der aufgenommenen Leistung bildet die Blindleistung, die durch aufwendige Kondensatoranordnungen stets begrenzt werden kann. Die Verwendung der den Blindstrom kompensierenden Kondensatoren bedeutet jedoch immer eine Verschlechterung der Arbeitsbedingungen und eine Erhöhung der Herstellungskosten der Induktionsmotoren. Die Blindleistung ist von der Speisespannung und dem Speisestrom sowie dem Leistungsfaktor abhängig, wobei der Leistungsfaktor den Cosinus des zwischen dem Strom und der Spannung bestehenden Phasenwinkelunterschieds bedeutet.

Die Verbesserung des Leistungsfaktors wurde bei vielen Erfindungen als Ziel gesetzt. Neben der Verwendung der Kondensatoranlagen sind verschiedene Lösungen bekannt, wie unter anderen beim Hysteresemotor nach der DE-C-32 32 914. Dort wird ein als Hohlzylinder ausgebildeter dauermagnetischer Läufer vorgeschlagen, der während des Betriebes des Motors einer radialen Magnetisierung unterzogen wird. Durch die zweckmäßige Auswahl der Dicke der Wände kann erreicht werden, daß die Magnetkreise fast alle durch den Luftspalt des Motors geschlossen werden; daher ist eine Verbesserung sowohl des Wirkungsgrades als auch des Leistungsfaktors erreichbar.

Der Nachteil der bekannten Lösung besteht darin, daß die Verbesserung des Leistungsfaktors schlecht einstellbar ist, d.h. bei verschiedenen Motoren gleichen Aufbaus können unterschiedliche Leistungsfaktoren auftreten.

Der gleiche Nachteil kann im Zusammenhang mit dem in der DE-C-28 32 165 dargestellten Reluktanzgenerator erwähnt werden. In dieser Patentschrift wurde die Verwendung einer aus dauermagnetischem Stoff hergestellten Generatorwelle vorgeschlagen. Der Läufer des Generators ist mit dieser Welle verbunden, welche auch ein den Magnetfluß ablenkendes Element trägt. Der Magnetfluß der Erregerwicklung wird im Mittelteil des Generators konzentriert, wobei der niedrigste magnetische Widerstand zu überwinden ist, da das aus einem ferromagnetischen Stoff bestehende flußablenkende Element den Mittelbereich der Erregerwicklung und die Welle ausfüllt.

Durch die Erfindung wird die Aufgabe gelöst, den Wirkungsgrad der Induktionsmotoren mit einfachen Mitteln zu verbessern, d.h. einen Induktionsmotor zu schaffen, dessen Leistungsfaktor auf einen beliebig ausgewählten Arbeitspunkt mit vorbestimmtem Wert bei hoher Genauigkeit ausgelegt werden kann.

Die Erfindung beruht auf der Erkenntnis, daß die Erhöhung und Einstellbarkeit des Leistungsfaktors durch Verwendung eines ergänzenden Rotors beim Läufer erreichbar ist, falls jener aus ferromagnetischem Stoff besteht und gegenüber dem Läufer freilaufend abgestützt ist.

In der Patentliteratur sind Vorschläge zu finden, wonach im Innenraum eines Ständers eines Motors mehrere drehbare Elemente angeordnet sind. Jedoch können dadurch, wie dem Unteren entnehmbar ist, lediglich Spezialaufgaben bei speziellen Motoren gelöst werden.

Der Einbau eines ergänzenden Läufers ist z.B. aus der DE-A-30 45 820 erkennbar. Diesem Vorschlag nach werden auf der Motorwelle ein Käfigläufer und ein mit Wicklung versehener Innenläufer zueinander konzentrisch eingebaut, wobei der Außenläufer und der Ständer mit einer äußeren Spannungsquelle verbunden sind. Dadurch können unterschiedliche Drehzahlen der Läufer erreicht werden. Der derart ausgebildete Motor ist eine Spezialmaschine, bei der die Erhöhung des Leistungsfaktors nicht möglich ist.

In der WO-85/03174 wurde die Unterteilung des Läufers auf zwei Teile vorgeschlagen, und zwar auf den äußeren Käfig sowie einen hiergegen freilaufenden inneren ferromagnetischen Teil. Derart entsteht ein einphasiger Motor kleiner Leistung mit zwei oder vier Polen, wobei die Erhöhung des Leistungsfaktors als Aufgabe nicht auftritt und praktisch nicht erreichbar ist.

Zur Lösung der gestellten Aufgabe wurde ein Induktionsmotor geschaffen, der einen Ständer mit einer Ständerwicklung sowie einen davon über einen Luftspalt getrennten, mit einer Motorwelle verbundenen Läufer enthält, wobei der Läufer mit einem stromleitenden Element sowie einem magnetisch erregten Körper ausgestaltet ist und erfindungsgemäß im Luftspalt ein zwischen dem Ständer und dem Läufer angeordnetes, gegen den Läufer freilaufend unterstütztes, aus permanentmagnetischem · (vormagnetisierten ferromagnetischen) Stoff vorbereitetes Drehelement vorgesehen ist, das zum Läufer koaxial entweder oberhalb des stromleitenden Elementes (des Käfigs oder der Wicklung) des Läufers oder in einem Luftspalt zwischen dem stromleitenden Element und dem magnetisch erregten Körper des Läufers angeordnet ist.

Wie bekannt, kann der Induktionsmotor mit einem Innenläufer, einem Mittelläufer oder einem Außenläufer aufgebaut werden. Dementsprechend kann das Drehelement auf dem Läufer entweder auf dessen äußeren Oberfläche oder auf dem Körper, weiter auf der Motorwelle und bei Verwendung eines Außenläufers auf dem Ständer gelagert sein.

Das Drehelement ist vorteilhaft zumindest so lang wie der unter ihm liegende Teil des Läufers. Es ist zweckmäßig, das Drehelement als walzenförmige Hülse auszubilden, die zum Beispiel aus dünnen ferromagnetischen Bändern besteht und - dank der Vormagnetisierung - die gleiche Anzahl von Polen aufweist wie die Ständerwicklung. Die in radialer Richtung vormagnetisierten ferromagnetischen Bänder können auf der inneren oder äußeren Oberfläche einer magnetisch nicht erregbaren metallischen, z.B. aus Aluminium vorbereiteten Walze aufgeklebt werden. Der Grundstoff der Bänder kann unter anderen Eisen oder ein Seltenmetallmagnet (zum Beispiel Samarium-Kobalt oder auf Neodimium basierender Stoff) sein.

Das auf dem Ständer abgestützte Drehelement ist vorteilhaft als Kreisring ausgebildet, der gleichfalls mit in radialer Richtung vormagnetisiertem ferromagnetischen Stoff besteht. Beim Mittelläufer bildet das Drehelement eine Scheibe, die auf der Motorwelle gelagert ist, wobei der ferromagnetische Stoff der Scheibe in axialer Richtung vormagnetisiert ist.

Bei dem erfindungsgemäßen Induktionsmotor, falls jener einen mit einem Käfig versehenen Kurzschlußläufer enthält, ist es vorteilhaft, das Drehelement auf einem Kurzschlußring abzustützen, wobei der Kurzschlußring mit dem stromleitenden Element fest verbunden ist. Die Abstützung erfolgt im allgemeinen über Nadellager oder Gleitlager.

Bei einem erfindungsgemäßen Asynchron-Induktionsmotor wird daher erfindungsgemäß ein ergänzender Synchronläufer vorgesehen, der entweder unmittelbar auf der Motorwelle oder auf dem Läufer beweglich abgestützt einen synchron zu dem magnetischen Drehfeld des Motors freilaufenden Teil bildet und zur Erregung des Läufers des Induktionsmotors beitragen kann.

Dadurch können die Kupfermenge des Motors und die zur Erregung notwendige Leistung vermindert werden und wird die dem Netz entnommene Blindleistung verringert. Derart vermindert sich die Energieaufnahme aus dem elektrischen Netz. Ein weiterer Vorteil besteht darin, daß der Leistungsfaktor mit gewünschtem Wert einem vorgewählten Arbeitspunkt zugeordnet werden kann.

Durch die erfindungsgemäße Lösung kann die Aufnahme der wirksamen Leistung vom Netz im Verhältnis zur Aufnahme der Blindleistung bei den Endpunkten des Netzes vereinfacht . werden; so wird die Blindleistungsaufnahme des durch das Netz gespeisten Systems vermindert. Die Erfindung kann sowohl bei einphasigen als auch dreiphasigen Induktionsmotoren beliebiger Leistung (zum Beispiel von 40 W bis 1000 kW), und insbesondere bei den in Haushalten eingesetzten Motoren verwendet werden.

Die Erfindung wird im folgenden anhand von bevorzugten Ausführungsformen näher erläutert, die aus der Zeichnung ersichtlich sind. In der Zeichnung zeigen:

Figur 1 den Querschnitt eines erfindungsgemäßen Induktionsmotors mit einem Läufer und einem ergänzenden Rotor im Luftspalt des Motors,

Figur 2 den Querschnitt eines erfindungsgemäßen Induktionsmotors mit einem Läufer, auf dem ein freilaufendes Teil als ein ergänzender Rotor gelagert ist, ohne Darstellung des Ständers,

Figur 3 den Querschnitt eines erfindungsgemäßen Induktionsmotors mit einem inneren Läufer und einem inneren Luftspalt, worin ein ergänzender Rotor angeordnet ist,

Figur 4 den Querschnitt eines erfindungsgemäßen Läufers des in Fig. 3 dargestellten Induktionsmotors mit einem inneren Läufer und einem inneren Luftspalt, worin ein ergänzender Rotor vorgesehen ist, ohne Darstellung des Ständers,

Figur 5 den Längsschnitt eines mit Zwischenläufer und parallel dazu angeordnetem ergänzenden Rotor ausgebildeten erfindungsgemäßen Induktionsmotors,

Figur 6 die Vorderansicht eines als Walze ausgebildeten Drehelementes, und

Figur 7 die Seitenansicht des Drehelementes gemäß Fig. 6

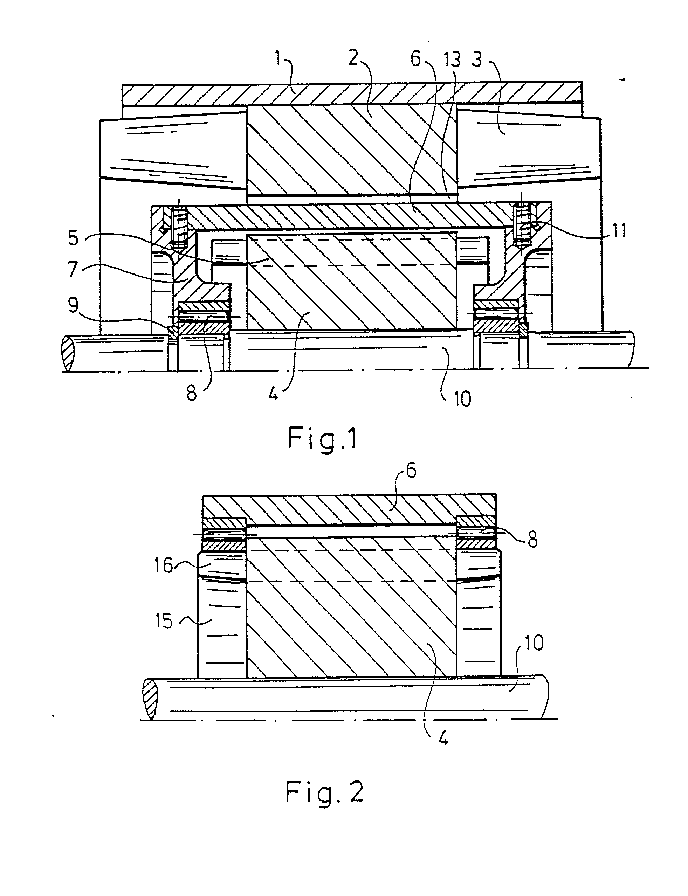

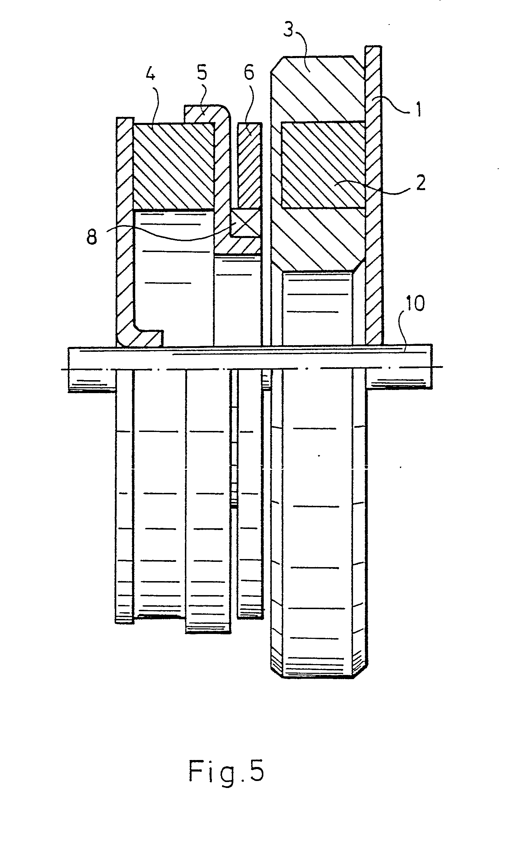

Zur näheren Erläuterung werden einige Ausführungsbeispiele mit Induktionsmotoren ausgewählt, bei denen der Läufer im Innenraum des Ständers angeordnet ist (Fig. 1 bis 4). Jedoch kann das Grundprinzip der Erfindung auch bei solchen Induktionsmotoren verwirklicht werden, bei denen der Läufer außerhalb des Ständers angeordnet ist (Fig. 5).

In einem Induktionsmotor mit Innen-und Außenläufer im Allgemeinen und bei dem erfindungsgemäßen Induktionsmotor im Besonderen ist ein Gehäuse 1 oder ein Halteplatte zur Festlegung eines mit Ständerwicklungen 3 versehenen Ständers 2 vorgesehen. Mit einer Motorwelle 10 fest verbunden ist koaxial zum Ständer 2 ein Läufer eingebaut, welcher mit Läuferwicklungen 5 (Fig. 1 und 5) oder mit einem Käfig 15 (Fig. 2 bis 4) in herkömmlicher Weise versehen ist. Die Läuferwicklungen 5 bzw. der Käfig 15 bilden den Läufer gemeinsam mit einem magnetisch erregten Körper 4 bekannten Aufbaus (z.B. Blechpaket), wobei zwischen dem Ständer 2 und dem Läufer ein Luftspalt 13 vorgesehen ist.

Der herkömmliche Motoraufbau wird erfindungsgemäß so verändert, daß zwischen dem Ständer 2 und dem magnetisch erregten Körper 4 ein zusätzliches Drehelement 6 vorgesehen ist, welches gegenüber dem auf der Motorwelle 10 fest abgestützten Läufer freilaufend drehbar ist. Der Läufer besteht daher aus dem Körper 4 und den Läuferwicklungen 5 oder dem Käfig 15, und ist an das Drehelement 6 angepaßt, das freilaufend auf der Motorwelle 10 unmittelbar oder auf dem Körper 4 gelagert ist. Das Drehelement 6 ist aus einem dauermagnetischen Stoff aufgebaut und kann walzenförmig oder ringförmig ausgebildet sein. Das Drehelement 6 wird über Lager, insbesondere Nadellager 8, auf der Motorwelle 10 oder dem ersten Teil 4, insbesondere der Läuferwicklung 5 konzentrisch zum Läufer abgestützt.

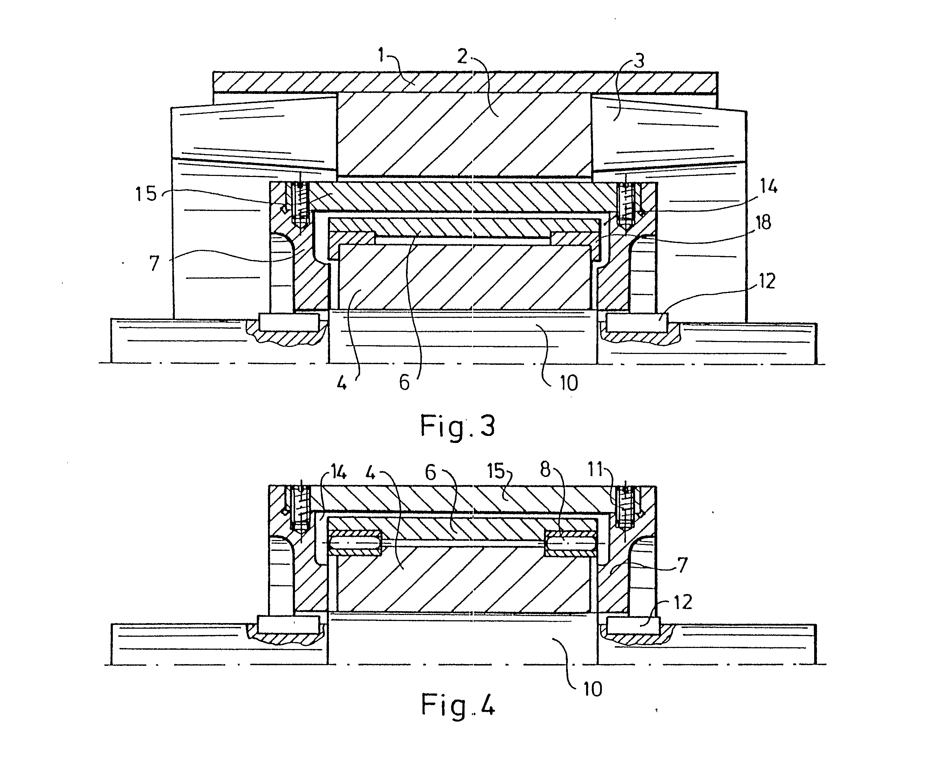

Wie aus Figur 1 ersichtlich, dient eine Scheibe 7 zur Abstützung des walzenförmigen Drehelementes 6, und jene ist auf den Nagellagern 8 abgestützt. Die letzteren sind Sprengringen 9 angepaßt, wobei eine oder mehrere Spannschrauben 11 zur Befestigung des Drehelementes 6 an der Scheibe 7 vorgesehen sind. Offensichtlich können andere Befestigungsmöglichkeiten verwendet werden und ist auch die Verwendung von Gleitlagern 18 (Fig. 3) als vorteilhaft anzusehen. Die Scheibe 7 besteht aus einem leichten Material, wie Kunststoff oder Aluminium; sie muß nicht aus einem ferromagnetischen Stoff ausgebildet werden.

Bei einigen Typen ist der Läufer des Induktionsmotors mit einem Käfig 15 ausgestattet (Figuren 2, 3 und 4), wobei ein Kurzschlußring 16 vorgesehen ist, der mit dem Körper 4 fest verbunden ist. Der Kurzschlußring 16 dient zur Abstützung der Nagellager 8 und bietet die Möglichkeit des einfachen Einbaus des Drehelementes 6.

Wie es der Figur 1 zu entnehmen ist, entstehen durch die Verwendung eines geteilten Läufers zwei Luftspalte im Innenraum des Induktionsmotors. Das Drehelement 6 besetzt einen Teil des Luftspaltes 13 zwischen dem Ständer 2 und dem Läufer. Zwar vergrößert sich durch die Vergrößerung des Luftspaltes 13 der Magnetisierungsstrom des Induktionsmotors, was jedoch durch die zweckmäßige Auswahl des dauermagnetischen Stoffes des Drehelementes 6 gut kompensiert werden kann.

Wie es der Figur 3 entnehmbar ist, kann ein innerer Luftspalt 14 im Läufer ausgebildet sein, der in oder unter dem Käfig 15, jedoch immer oberhalb des Körpers 4 liegt. Der innere Luftspalt 14 - der nicht unbedingt notwendig ist - nimmt das Drehelement 6 auf, welches in dem allseitig geschlossenen inneren Luftspalt 14 angeordnet auf erhöhtem Pegel gegen Störwicklungen gesichert ist.

Der Käfig 15 besteht - wie herkömmlich - aus Aluminium oder anderem nicht feromagnetischen Metall (Figur 3 oder 4) und ist bei dieser Ausführungsform über die Spannschrauben 11 mit der jeweilgen Scheibe 7 fest verbunden. Die Scheiben 7 sind über Nutfedern 12 mit der Motorwelle 10 fest verbunden. Die aus Figur 3 ersichtlichen Gleitlager 18 können durch die Nagellager 8 nach Figur 4 ersetzt werden.

Im erfindungsgemäßen Induktionsmotor mit Zwischenläufer nach Figur 5 weist der Ständer 2 keine Nut auf und die Ständerwicklung 3 ist in Kunstharz eingebettet: sie bildet eine Luftspaltwicklung.

Das Drehelement 6 ist in Form einer flachen, axial zwischen dem wellenfesten Körper 4 des Läufers und dem Ständer 2 angeordneten Scheibe aufgebaut. Die geraden Drehungsebenen des Läufers und des Drehelementes 6 liegen bei dieser Lösung parallel. Das Drehelement 6 kann sowohl an dem Ständer 2 (z.B. auf einem daran ausgebildeten kreisscheibenförmigen Vorsprung). an der Motorwelle 10 als auch - wie in Figur 5 ersichtlich ist - am Läufer freilaufend über das Lager 8 abgestützt sein.

Im Betrieb des erfindungsgemäßen Induktionsmotors sind die Lager (Nagellager 8 oder Gleitlager 18) entsprechend des Unterschieds zwischen der Drehzahl des Asynchronmotors und derjenigen des Synchronmotors belastet. Daher ist die Lebensdauer der Lager hoch. Der Energiebedarf ist wegen der Verwendung des Drehelementes 6 als Synchron-Läuferteil des Induktionsmotors gering, die zu einem sehr kleinen Wert des Belastungswinkels führt, unabhängig davon, ob das Drehelement 6 innerhalb oder außerhalb des Läufers eingebaut ist.

Das Drehelement 6 kann wie erwähnt walzenförmig (Figuren 1 bis 4), scheibenförmig (Figur 5) oder kreisringförmig sein. Die ringförmige Ausbildung ist zur walzenförmigen oder zur scheibenförmigen ähnlich - abhängig von der nachstehend dargestellten Anordnung des magnetischen Stoffes des Drehelementes.

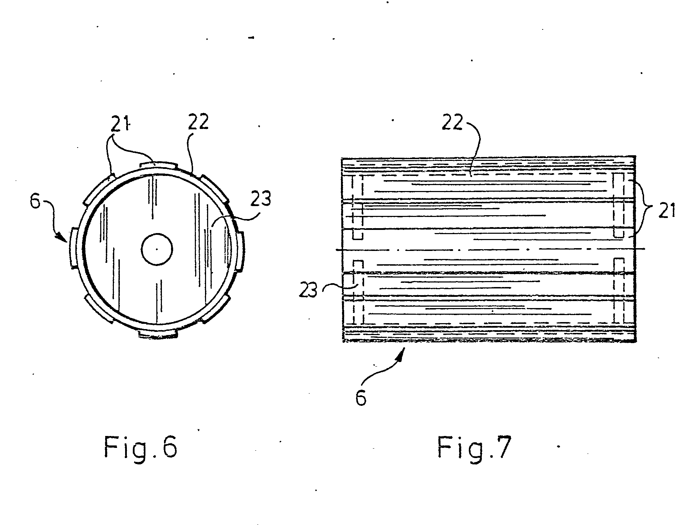

Das Drehelement 6 nach den Figuren 6 und 7 ist walzenförmig ausgebildet, es dient als eine den Läufer umgebende Hülle, die mit aus einem leichten Material, wie Kunststoff oder Aluminium ausgebildeten Abschlußwänden 23 beidseitig geschlossen ist. Die Abschlußwände 23 sind an die Lager 8 oder 18 angepaßt (in den Figuren 6 und 7 nicht gezeigt) und mit einem zweckmäßig als Hohlkörper aus Aluminium oder Kunststoff vorbereiteten Haltezylinder 22 verbunden. Auf der (inneren oder äußeren) Oberfläche des Haltezylinders 22 sind ferromagnetische Bänder 21 aufgeklebt, die z.B. durch pulvermetallurgische Methoden hergestellt worden sind. Die Bänder 21 sind in bekannter Weise in radialer Richtung vorteilhaft so vormagnetisiert, daß die Anzahl der Pole des Magnetfeldes zu der Polanzahl der Ständerwicklung 3 gleich ist. Wenn notwendig können im Haltezylinder 22 zwischen den Bändern 21 Luftspalte vorbereitet werden. Der Haltezylinder 22 kann selbstständig das Drehelement 6 bilden, falls jener aus einem ferromagnetischen Stoff besteht, wobei die Abschlußwände 23 z.B. aus Kunststoff ausgebildet sind.

Bei kostspieligen, auf Seltenerdmetallen (z.B. Kobalt-Samarium-Mischung, Neodium) basierenden Bändern 21 können jene aus hintereinander und nebeneinander in Reihen angeordneten Teilen mit Abmessungen von 1,8 x 4, 5 x 24 mm vorbereitet werden, wobei ein aus Aluminium bestehender Haltezylinder 22 mit einer Wanddicke von z.B. 1,5 mm vorgesehen ist.

Ist das Drehelement 6 eine Scheibe, wie aus Figur 5 ersichtlich ist, so sind die Bänder 21 senkrecht zur Motorwelle 10 aufgeklebt und in axialer Richtung vormagnetisiert. Die Scheibe kann sowohl aus nichtferromagnetischem Stoff (mit aufgeklebten ferromagnetischen Bändern), als auch einem ferromagnetischen Stoff (ohne Bänder) ausgebildet werden. Das walzenförmige Drehelement 6 und ebenso das scheibenförmige oder ringförmige Drehelement kann sowohl an der Motorwelle 10 als auch im Ständer 2 oder im Läufer abgestützt werden, wobei die Anpassung, der Einbau, zweckmäßig von der Motorkonstruktion abhängig, bestimmt werden kann.

Den obigen Ausführungen ist zu entnehmen, daß das Drehelement 6 eine Vergrößerung des Luftspaltes zwischen dem Ständer 2 und dem Läufer bewirkt, was an sich eine geringe Verschlechterung der Arbeitsparameter (die Erhöhung des Magnetisierungsstromes) hervorrufen würde. Dieser Effekt folgt der Tatsache, daß das Drehelement aufgrund seiner Dicke einer Vergrößerung des Abstandes zwischen dem Ständer und dem Läufer bedarf. Die Dicke des Drehelementes macht im Allgemeinen etwa 3 ... 3,5 mm aus; bei höheren Motorleistungen kann sie größer sein. Jedoch ist die Anwesenheit des ferromagnetischen Drehelementes 6 mit solchen Vorteilen verbunden, daß die erwähnte Verschlechterung vollständig kompensiert wird, da die modernen ferromagnetischen Stoffe eine wirklich hohe Koerzitivkraft gewährleisten können.

Im erfindungsgemäßen Induktionsmotor werden die Vorteile der Synchronmotoren und der Induktionsmotoren derart vereinigt, daß das Drehelement 6 als ein ergänzender Rotor magnetische Energie leistet, wodurch die Magnetisierung des Motors erleichtert wird und weniger Leistung aus dem Netz zum Aufbau des magnetischen Hauptfeldes (Drehfeldes) benötigt wird. Beim Einschalten der Speisespannung (die einphasig oder dreiphasig ist) entsteht in der Ständerwicklung ein kreissymmetrisches oder elliptisches Magnetfeld, das sich mit Synchrondrehzahl dreht. Dabei werden der Läufer und das Drehelement 6 zur Asynchrondrehzahl beschleunigt, bei deren Erreichen das Drehelement 6 auf die Synchrondrehzahl in einem sehr schnell ablaufenden Prozeß weiter beschleunigt wird. In diesem Zustande bewirkt das Drehelement 6 eine Erregung, welche zu der des magnetischen Hauptfeldes des Motors hinzugefügt wird. Derart kann mit entspechender Auswahl der Stoffe die magnetische Erregung zwischen dem Ständer und dem Läufer bedeutend erhöht werden. Die Beschleunigung des Drehelementes kann durch die Anwesenheit eines magnetisch nicht erregbaren Metalls beim ferromagnetischen Stoff als Haltezylinder 22 verbessert werden, womit eine Käfigwirkung gewährleistet wird.

Durch zweckmäßige Auswahl des dauermagnetischen Stoffes kann der Leistungsfaktor gemäß den Anforderungen eingestellt werden. Bei den Belastungen, die niedriger sind als die dem Leistungsfaktor folgenden, arbeitet der Induktionsmotor auf kapazitive Weise als ein überregter Synchronmotor, und wenn die Belastung die dem ausgewählten Arbeitspunkt entsprechende überschreitet, ist der Blindstrombedarf bedeutend geringer als bei den bekannten Induktionsmotoren.

Das erfindungsgemäße Drehelement kann bei allen Induktionsmotoren verwendet werden. Die Motorleistung, die Anzahl der Wicklungspole, die Anzahl der Phasen der Speisespannung, die Anordnung des Läufers sind praktisch nicht begrenzt; im Motor kann der ergänzende Rotor ohne weiteres verwendet werden und dann ist mit einer bedeutenden Verbesserung der energetischen Eigenschaften (mit einem Leistungsfaktor bis 0,95, d.h. mit verminderter Aufnahme der Blindleistung) zu rechnen.

**Ansprüche**

1. Induktionsmotor, der einen Ständer (2) mit einer Ständerwicklung (3) sowie einen davon über einen Luftspalt (13) getrennten, mit einer Motorwelle (10) verbundenen Läufer enthält, wobei der Läufer mit einem stromleitenden Element, sowie einem magnetisch erregten Körper (4) versehen ist, dadurch gekennzeichnet, daß im Luftspalt (13) ein zwischen dem Ständer (2) und dem magnetisch erregten Körper (4) angeordnetes, gegen den Läufer freilaufend abgestütztes, aus permanentmagnetischem Stoff ausgebildetes Drehelement (6) vorgesehen ist.

2. Induktionsmotor nach Anspruch 1, dadurch gekennzeichnet, daß das Drehelement (6) oberhalb des stromleitenden Elementes des Läufers angeordnet ist.

3. Induktionsmotor nach Anspruch 1, dadurch gekennzeichnet, daß das Drehelement (6) in einem im Läufer zwischen dem magnetisch erregten Körper (4) und dem Ständer ausgebildeten inneren Luftspalt (13) angeordnet ist.

4. Induktionsmotor nach einem der Ansprüche 1 bis 3, dadurch gekennzeichnet, daß das Drehelement (6) über Lager (8, 18) an dem Läufer abgestützt ist.

5. Induktionsmotor nach einem der Ansprüche 1 bis 3, dadurch gekennzeichnet, daß das Drehelement (6) über Lager (8, 18) an der Motorwelle (10) abgestützt ist.

6. Induktionsmotor nach einem der Ansprüche 1 bis 3, dadurch gekennzeichnet, daß das Drehelement (6) über Lager (8, 18) an dem Ständer (2) abgestützt ist.

7. Induktionsmotor nach einem der Ansprüche 1 bis 6, dadurch gekennzeichnet, daß das Drehelement (6) als Kreisring ausgebildet ist.

8. Induktionsmotor nach einem der Ansprüche 1 bis 6, dadurch gekennzeichnet, daß das Drehelement (6) als Scheibe ausgebildet ist.

9. Induktionsmotor nach einem der Ansprüche 1 bis 6, dadurch gekennzeichnet, daß das Drehelement (6) als Walze ausgebildet ist.

10. Induktionsmotor nach einem der Ansprüche 1 bis 9, dadurch gekennzeichnet, daß das Drehelement (6) mit aus ferromagnetischem Stoff vorbereiteten Bändern (21) versehen ist, welche in zum Läufer normaler Richtung vormagnetisiert sind und die gleiche Polanzahl aufweisen wie die Ständerwicklung (3).

11. Induktionsmotor nach einem der Ansprüche 1 bis 10, dadurch gekennzeichnet, daß der ferromagnetische Stoff des Drehelementes (6) auf einem elektrisch leitenden, aus magnetisch nicht erregbarem Stoff, insbesondere Aluminium oder Kupfer, ausgebildeten Halteelement, insbesondere auf einem Haltezylinder (22) angeordnet ist.

Fig.1

Fig. 2

Fig.3

Fig.4

0 246 410

Fig.5

Fig.6

Fig.7